# EUROPEAN PATENT APPLICATION

(11) **EP 1 829 761 A1**
(43) Date of publication of application: **05.09.2007**
(21) Application number: 04805085.0
(22) Date of filing: 03.12.2004
(51) Int. Cl.: B61B 13/08, B60L 13/04

(54) **MULTIFUNCTIONAL MODULAR SYSTEM FOR ENERGY TRANSFORMATION**

(71) Applicant: Yotam S.A., 28043 Madrid (ES)
(72) Inventor: BAQUERO MOCHALES, Macario, E-28043 Madrid (ES)
(74) Representative: Saura Cuadrillero, Salvador
(86) International application number: PCT/ES2004/000542
(87) International publication number: WO 2006/061444

(57) **Abstract**

The invention relates to a multifuncional modular energy transformation system which is particularly suitable for levitation railway transport, which consumes much less energy than hitherto-known systems since levitation is achieved using a magnetic generating system having a constant force ans stable equilibrium, and which is energetically self-sufficient by transforming H₂O into hydrogen and oxygen by means of solar energy captured by the system. The inventive system is of minimal weight and is not harmful to the environment. The invention comprises magnetic assemblies which are disposed on non-ferromagnetic supports that are preferably made from aluminium and encapsulated in resin and magnets which are disposed longitudinally in a continuous manner. In this way, the system enables the non-punctiform application of constant distributed forces, unlike hitherto-known systems in which the electrical impulses necessary to generate the punctiform magnetic field required for levitation and movement are so intense and of such force as to give rise to significant problems in terms of construction, control and maintenance that do not arise with the inventive system.

## Description

### FIELD OF THE ART

As its title describes, the object of this invention is a system consisting of a set of modules which together define a multifunction modular energy transformation system, preferably applied to railway transport.

### PRIOR ART

The prior art related to this invention includes several antecedents of trains that operate by electromagnetic levitation, as this technology provides considerable advantages for application in this type of transport, particularly when the object is to reach higher speeds than those obtained with traditional trains. However, the current drawbacks suffered by trains operating by electromagnetic levitation make it unfeasible and impractical to generalise its use.

### TECHNICAL PROBLEM TO BE SOLVED

The development of railway transport technology has historically revolved about two main options. The first one is what is considered to be a conventional high-speed train; the second is trains with electromagnetic-power based levitation and movement.

Even in view of the great progress made in both areas, no great or outstanding advantages have been obtained, leading to a situation currently closed to improvements and innovations. These systems have a high cost of construction and maintenance, they require significant, complex and expensive safety measures, any future modifications required in them will be difficult to implement and they require powerful and costly electric power transport systems due to their high power consumption and full dependence on said power for both the levitation system and for security and the movement system.

On another hand, the drawbacks of railway transportation systems such as the Spanish AVE®, the Japanese bullet train or SHINKANSEN®, the German TRANSRAPID® etc. are well known. Their design, philosophy and structure, although allowing slight modifications, are unable to adapt to the technological advances that the future may bring. In addition, they are extraordinarily expensive.

Similarly, one cannot ignore the problem raised by the complete dependence of current railway transport systems on electric power, the absence of which due to any circumstance would lead to serious problems.

One of the drawbacks faced by electromagnetic levitation trains relates to starting and stopping them, as at these times the trains must use wheels until attaining the speeds at which levitation is possible, in addition to the specific problems that arise in case of emergency stops.

The use of electric power generates certain problems known in conventional rail transport systems in case of power loss in the line; it also affects the cost of the safety systems and the means used to handle all equipment in order to guarantee power supply or to keep voltage characteristics in the range needed for a correct general operation.

It must also be considered that the use of superconductors in railway transport in order to make levitate a mass as heavy as a train and make it move along a track currently requires extremely low temperatures and huge power demands for operation, which in view of current technology known in the state of the art makes their use very costly due to the technical conditions that must be maintained. Problems increase considerably in view of the weight of the structure needed to keep the superconductors under the critical working temperature, as this leads to spiralling costs that are hard to quantify, as the greater the weight the greater the difficulty of levitation and displacement.

### TECHNICAL SOLUTION PROVIDED BY THE INVENTION

In order to overcome the aforementioned problems and drawbacks, the present invention contributes to the state of the art of railway transport the application of a system based on a modular, multifunction approach that allows a number of non-excluding options compatible with the use of various traction systems and power sources, which in view of its open design can be combined with currently-used conventional systems and future systems.

The object of the present invention relates to a modular system which, based on the combination and formation of a set of sub-modules, allows obtaining the essential functions specifically needed for the full operation of a railway transport system with a number of advantages in its technical, functional and economic characteristics, namely a much lower power consumption than currently known systems, which represents a significant advantage from an environmental standpoint, achieved by combining elements that do not harm the environment as it employs natural, non-polluting energy sources such as solar, magnetic and gravitational energy, as well as water and air.

The above defines the framework in which the studies and experiences leading to the present invention have been carried out. This invention represents an improvement of rail transport systems by offering a system composed of the combination of a set of sub-modules forming an overall system which, due to its design characteristics different from those of conventional trains and electromagnetic levitation prototypes currently known, offers considerable advantages over known systems by providing a fully open and adaptable system that is energetically self-sufficient, with a reduced weight and minimal power consumption resulting from levitation obtained by a magnetic generating system having a constant force and stable equilibrium; the use of solar cells to transform solar power into electric power or to break down water into hydrogen and oxygen, allowing the use hydrogen as a fuel in different traction systems of the magnetic generating system having a constant force and stable equilibrium, or to use the hydrogen as a fuel for other purposes; liquid nitrogen, oxygenated water that provides the hydrogen energy storage, whether for use as the system fuel or for other purposes, by means of batteries or large condensers included in the system.

### ADVANTAGES OF THE INVENTION

In this section it is fitting to mention the positional versatility of the invention claimed, as is modular design, small size and weight allow its adaptation to different terrains and different technical and mechanical configurations, which allow a full adaptation to the various alternatives required in each case.

In addition, the assembly of the invention is sturdy and resistant, as it offers a system of forces composed of several magnetic assemblies disposed on non-ferromagnetic supports, such as an inverted-T profile preferably made of aluminium and encapsulated in resin, which allows great adaptability and resistance in extreme operation conditions; longitudinally-disposed magnets allow applying constant distributed forces that are not applied at specific points, unlike hitherto-known systems in which the electrical impulses necessary to generate the point-like magnetic field required for levitation and movement are so intense and of such force as to give rise to significant problems in terms of construction, control and maintenance that do not arise with the inventive system, providing an assembly with a great resistance to impacts, whether accidental or intentional, not resulting from the ordinary operation of the system.

Also worth noting among the advantages of the present invention is its adaptability to different operational needs due to the self-regulation of forces in the magnetic generating system module having a constant force and stable equilibrium according to the mass that must be levitated and moved, understanding that this is in given operating conditions without detriment to operational safety and notwithstanding its excess weight system based on electromagnetic wheel components, due to the system of motors/generators that depending on the requirements acts for movement or control, as well as systems for power recovery in case of need that will allow keeping the train in motion until normal conditions are recovered.

Other advantages of the system being described over those of the state of the art of rail transport considered herein result from its mechanical arrangement, the technology used, the components that conform it and particularly the magnetic generating module having a constant force and stable equilibrium, which allows the functional division between levitation and displacement of the same module, while allowing an assembly for power intermodulation and interference between the components of the modules that make up the system. The main object of said assemblies is to provide power transfer between the aforementioned modules and the variable or power-well magnetic generator. This power transfer is produced by an energy intermodulation and interference meant to provide a fully controlled motion of a mass along the railway track; we can consider the system of forces of reference as energy wells applied on a zero-energy displacement axis, since there is a complementary symmetry system and the mass can be raised on a zero-displacement energy axis of the system of positional forces, thereby allowing to use a displacement control system based on a matrix control grid with superconductors and a geometrical modelling of the magnetic field by changing several of the ferromagnetic components associated to the system. As a whole, the mass undergoes a uniform acceleration determined by the transfer exerted by the positional energy wells on the magnetic generator having constant force and stable equilibrium, with partial losses between the various operational segments of the energy wells, which determines in practice the resulting speed of the system.

Another property of the invention relates to its low power consumption. This is the result of the fact that one of its main components, the magnetic generator having a constant force and stable equilibrium, allows the levitation system to consume almost no energy and the displacement to be effected by energy transfer between this module and the energy well generator, another of the main components of the system, since as a whole the mass undergoes a uniform acceleration produced by the energy transfer exerted by the positional energy wells, with partial losses between the various operational segments, arranged suitably according to the needs by the magnetic mould.

In the economic aspect, it is worth noting the low cost of manufacture, installation and maintenance of the present invention, improving on hitherto-known systems as its unlimited duration eliminates the problems resulting from power failures, as even if several of its components were to fail secondary components may be used until the cause of the malfunction is solved. The advantages described above, particularly those related to its use, make this invention of the greatest interest both for long and short-distance transport.

The advantages related to manufacture of the invention include its simple assembly due to the use of materials that can be factory-made in large scale, allowing a precise construction and quick start-up at the place of use.

The large effort made has allowed finding solutions which, when used in a modular system or assembly, present a wide range of improvements appreciable from any point of view, exceeding all other alternatives known in the state of the art as it is not necessary to sacrifice or undercut, as is often the case, issues related to safety, energy, environment, etc. This is not the case because a number of important objectives have been brought together without degrading the assembly.

One of the main achievements of the invention, as explained throughout this description, is to separate the various specific functions of the system into what can be considered sub-modules, thereby producing a fully modular and multifunctional assembly. It is also important to mention the countless advantages provided for its current and future global outlook, as it implies changing from a fully closed system to a fully open one in the widest sense of the term; this is made possible with a minimum of changes in its application and use. The various forms of capturing, transforming and storing energy together with the low power consumption of the system and the transformation and storage options for other energy sources allows providing energy for other applications not specified in this invention. The transformation of H₂O into hydrogen and oxygen by the solar power captured for the system allows storage in various ways for its use, according to need, allowing the system to be energetically self-sufficient if desired.

Among other advantages of this assembly is the fact that the system of the invention can be placed on either the upper or lower part of the general structure. The system is not limited by its final geometry nor the width of the assembly. It is also possible for the movement to take place on the inside or outside of the inverted T bars of its structure in order to use space efficiently, as well as to conceal the system is spaces protected from the outside, and the use of continuous force vectors from different sources and non-punctual forces from a single source.

### DESCRIPTION OF THE DRAWINGS

A set of drawings are accompanied to the description meant to aid the comprehension of the functionality of the invention, the figures of which represent a preferred and non-limiting embodiment of the present invention.

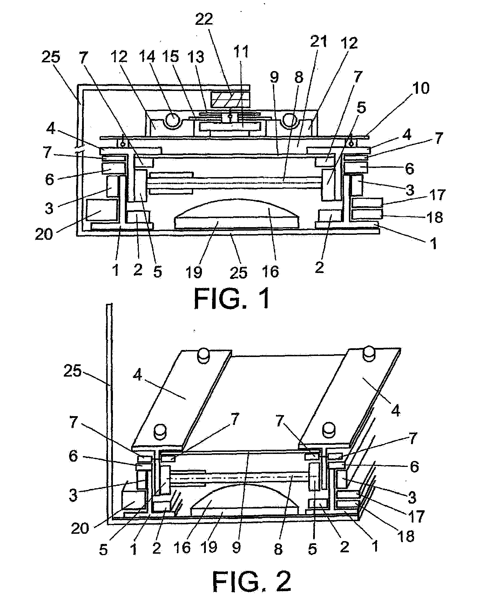

Figure 1 consists of a cross section of a front elevation view of the invention, superimposing the two main sub-modules of the invention between which is placed the cabin.

Figure 2 shows a perspective view of the same cross section of the front elevation view of the lower sub-module of the invention.

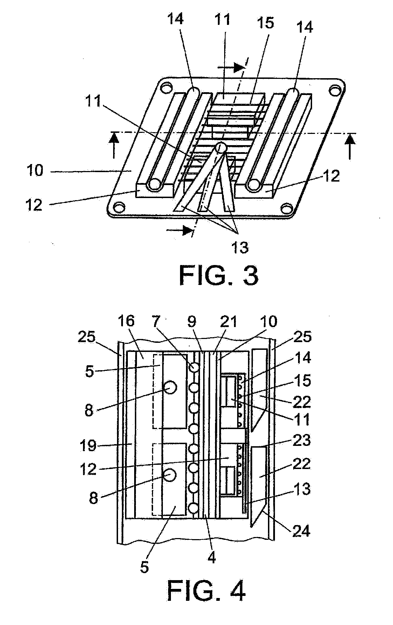

Figure 3 shows a top perspective view of the upper sub-module of the invention.

Figure 4 is a longitudinal section of the upper sub-module of the invention.

All of these figures show that the invention is characterised by consisting of two supports (1) with an inverted-T profile, each of which is made of a non-ferromagnetic material that is very hard, lightweight, easy to handle, inexpensive and resistant, such as aluminium, completed with synthetic resin to allow several adjustments, finishes and simple replacement if necessary.

Housed and attached in the lower part of each aforementioned inverted-T shape supports (1) is a magnet (2) covered in resin to provide punctual and weather resistance and for adaptation to the system; the dimensions of the magnet (2) are specified in thickness, height and magnetic orientation, longitudinally and axially, specifically to provide a vector force assembly with specific values and angles in order to form part with the rest of the assembly of the magnetic generator with a constant force and stable equilibrium.

On the top part of the vertical wall of each inverted-T support (1), next to the vertical leg of said T opposite the one in which the magnet (2) is placed, is housed and attached a magnet (3) with a magnetic orientation, both longitudinally and axially, meant to give resulting force vectors with dimensions that increase those of the magnet (2) in the levitation vector and apply a lateral pressure for guiding and centring the mobile part of the system.

In correspondence with each support (1), also with a T-profile that is opposite or opposed to the inverted T profile of the supports (1), is a support (4) of the sliding movable system of the assembly, which allows attaching and holding the block of lateral magnets (5) anchored at the height and with an orientation, width, thickness and magnetic flow of magnets with the specific values required to obtain, together with the support (1) and the magnets (2) and (3), the desired levitation effect of the system. These elements together generate a set of forces that provide the module with a considerable centring force at the same time that it allows maintaining a specific height range by collaborating with the force of gravity if it is attempted to separate or raise the mobile module from its correct position.

Attached to the top part of the inverted T of support (1), on the magnets (3) and along the path as an element allowing the platform to slide and to provide functions of braking, control and energy recovery in braking or steep slopes, is the magnet (6) or discontinuous ferromagnetic element.

Connected to each of the supports (4), one either side of its vertical leg and next to the angle with the horizontal legs, is a system or module (7), combined with the magnets (6), which includes a motor/generator with an adaptor for various fuels that uses several small generator motors linked together by a caterpillar-type pulley system. Each individual motor is composed by a torque adaptor system and a round magnetic system, with the entire system using an energy adaptor/recoverer. This assembly as a whole provides several redundant self-braking systems in case of power loss and disconnection from the traction system, as well as a protection system for work overload, high overload due to steep slopes or overload in extreme situations with much higher power demands or in case of emergency.

Between the supports (4) is placed a pair of modules (8), which complement the aforementioned magnets (6) and modules (7), greatly increasing the characteristics and safety of the sub-module described above by providing a system for width regulation and self-regulation of the centring of the weight of the magnetic generator having a constant force and stable equilibrium, as well as additional electromagnetic safety systems, auto-control hydraulic systems and pressurised air generator system. Associated to one of the supports (1) is foreseen an air propulsion system with functions such as an auxiliary self-centring component, or as an initial movement device.

Above the system (7) on one side, with the T-profile (4) connecting the two sides of the invention symmetrically, is the part (9).

On the top part of the assembly of the invention or upper sub-module and anchored to the T-profile (4), respect to which it is separated by the space (21) provided for a cabin, is the module (10). This module consists of a non-ferromagnetic box containing magnets (11) of different sizes, proportional to the weight required for a correct system operation. These magnets are superimposed to allow moulding the resulting magnetic field by interrelation with the ferromagnetic elements (12) and the ferromagnetic elements (13) composed of several elements of variable geometry.

In connection with the magnets (11) and ferromagnetic elements (12) and (13) is provided the controller (14), the magnetic effects of which shape the resulting geometry of the magnetic field. Regulation by this part (14) allows interaction with the energy wells generated by the magnet (22).

The Figures also show the programmable magnetic superconductor grid (15), complemented with a giant magnetic resistance circuit and a spin polariser. It is foreseen that the entire assembly be duly protected by non-ferromagnetic elements, such as resin. The controls of this assembly (15), joined to those performed by the controllers (14) on the magnetic shapers (12) and (13) provide all necessary system controls. In addition, element (15) includes the additional energy stores.

Between the parts with a the T profile (1) and inverted T profiles (4) is the solar energy capturing module (16) with a programmable optical matrix, formed by a set of lenses, prisms, mirrors and optic fibre to capture solar energy and direct it through optic fibres to the programmable matrix, which in turn sends it to the desired energy processing system.

The invention also comprises the bioenergy capturers and transformers (17), located on the outer horizontal segment of one of the inverted T profile supports (1). These are formed by a series of capturers of raw material that is then processed for obtaining the various compounds required for increased energy harnessing and storage in the store (18) placed under the aforementioned bioenergy capturers and transformers (17).

Said energy store and transformer (18) is meant to organise the entire process such that it transforms the energy components captured into the desired energy type, such as electric energy, hydrogen, liquid nitrogen, oxygenated water or any other element or compound with a high energy capacity that is non-polluting, safe and easy to transform subsequently. This element is stored or sent to the various distribution networks.

The electrolytic condenser (19), located in the lower sub-module of the invention between the two inverted T profiles (1) and foreseen as a secondary electric transformation store, consists of batteries of condensers in series and in parallel and a self-resonating electronic system with special characteristics that allow a number of steps intended to optimise the use of the electric energy generated by the system, such as transferring the electric power generated by the system to the power distribution grid or instead transferring energy from the electric grid to the storage systems, acting as a self-regulation element, as well as using the energy stored in case of emergency for own or external use.

The use of Peltier cells next to the superconductors (20), placed on the outer horizontal segment of the inverted T profile support (1) opposite that on which are placed the elements (17) and (18), as well as under the magnets (3), provided for laying out an electrical grid as a distribution element with high safety, low losses and high efficiency, implies that refrigeration is required. This refrigeration can be achieved by liquid nitrogen and the said Peltier cells, the energy for which is stored previously in the various processes by the components (16), (17), (18) y (19). Moreover, as an additional safety element connected electrically in parallel to the superconductor (20) is another conductor, the two conductors being interconnected electrically in parallel at regular intervals.

These Figures also show, in the upper sub-module separated from the lower sub-module as the space (21) foreseen for the cabin is between them, the longitudinal magnet (22) placed above a ferromagnetic component and defined by segments of predetermined length, both elements beginning at a sharp break (23) and having a tapering end (24). This operation is repeated at regular distances to obtain variable magnetic generators or magnetic energy wells. All of this is attached to the main structure by a set of supports.

Finally, the main structure (25) provides a frame and allows joining the various assemblies of the system being described.

### PREFERRED EMBODIMENT OF THE INVENTION

Given the numerous options provided by the system by order of hierarchy and levels, which allow a range of solutions meant to carry out a number of projects simply by changing the dimensions of the various components conforming the system, the embodiment described below is advisable for a specific case which is proposed herein as a preferred embodiment of the invention in order to determine a series of functions and characteristics allowing to make the most efficient use of the system.

As it is possible to place the magnetic generator having a stable equilibrium and constant force in the upper or lower sub-modules of the m ain structure, either on the inside or outside of the inverted-T profile supports (1) in order to make the best use of the available space, the range of weights considered which the system can support will determine in part the dimensions and characteristics of the components. However, in general it is possible to carry out a wide range of operations while maintaining the approach of the assembly.

As one of the most important conditions is to maintain the complementary symmetric of the assembly, this is, the assembly essentially consists of two identical but complementary parts, in case of a slight variation of the parts there is little effect on the final result; however, if only one of the parts is changed this may lead to a problem, as the final objective is to use a set of continuous force vectors from different sources, instead of punctual forces from a single source, in order to make levitate a mass. Having said this, we will proceed to describe the assembly process selected according to the project chosen.

On the support (1) made of non-ferromagnetic material with an inverted T shape, which can be made of aluminium or any other very hard non-ferromagnetic material, a small angle of the central part with respect to its height is foreseen to allow a proper technical adaptation between the various parts of the system. Then, the longitudinal magnet (2) is placed inside the inverted T (1) and on its base, considering its polarity and position, which must agree in the complementary parts of the system and be defined according to the polarity, size and shape of the magnets (5) of the mobile system. Then the magnet (3) is held against the end of the vertical leg of the inverted T profile (1) and on the side opposite the internal side in which the identical magnet (2) is placed. These operations are complemented with synthetic resin to allow a number of adjustments and different finishes, as well as a simple replacement if necessary. After this operation the longitudinal magnet (6) is anchored on both parts of the upper end f the inverted T (1) with spaced modulations of the magnetic field by interruptions or modulations of the thickness of the magnet (6), by operations performed previously according to need.

First, the previously selected magnets (5) will be attached on the set of supports (4), considering that their polarity must agree with that of the polarity of the magnets (2) and (3) to produce the magnetic generator with constant force and stable equilibrium.

Given the complexity of the internal assembly of the modules (7) and (8), both components are combined separately and then attached to the anchorings provided for such purpose on the supports (4); the remaining adjustments in the modules (7) and (8) must be made on the final unit.

The magnetic generator (22) with variable flow or energy wells is constituted from a longitudinal magnet and a magnetisation polarity perpendicular to it, superimposed on it is a ferromagnetic conductor such as iron. They are inclined (23) 90 degrees and end at a cut (24) at approximately 45 degrees. This operation is made on both at regular intervals determined by the final technical characteristics, as required to achieve an interrelation with the regulation and control system (14) of the magnetic generator (11), (12) and (13) geometrically shaped such that there is an interrelation and energy transfer resulting from adjusting the characteristics of the two magnetic fields by representing flow discontinuities throughout the track.

The magnets (11), ferromagnetic elements (12), variable geometry element (13) and shape control of the resulting field (14) are attached to the guide support of the case (10) such that they can be magnetically shaped by the position of the ferromagnetic elements (12) and (13) and the controller (14).

The function of the programmable magnetic superconducting grid (15) as a dual tuning magnetic generator means that based on a structure formed by a series of magnets with specific and predetermined shape, size and polarisation, a resonating circuit formed by a transformer wound with superconducting wire and the combination of various condensers, in series or in parallel, joined to an electronic oscillator. The system is controlled by a number of infrared sensors and a microcontroller that analyses the position of the various components, generating a synchronised oscillation between the electronic oscillator and the mechanical resonance frequency in motion of the system, allowing by controlling various phase differences to modify the speed and braking of the physical element of the system, as well as to return energy to the system when braking or descending a hill. An increase of an auxiliary coil in the system power transformer, also with superconducting wire, allows introducing energy to compensate the small losses and to recover energy when braking or descending a hill.

The assembly of the sections discussed above joined to the sub-module of the invention allows a longitudinal displacement along a surface with minimum losses approaching ideal efficiency.

The module (10) is anchored to the support (4) and for this purpose, on the support of the programmable optical matrix (16) the set of mirrors and lenses is mounted first, followed by the moving prism system. Then, the various optic fibres arriving from light capturing inputs are attached to said support, together with the matrix outputs, considering the various matrix combinations determined by the technical requirements. Next, the light capturing lenses and their fibre optics to channel light to the programmable optical matrix (16) are placed on their supports. As regards the elements (17) and (18), the procedure will be according to the specifications for the components of the raw energetic materials to be processed, transformed and stored, as it is not the same to work with gases or alcohols, for example. Special attention must be paid to the assembly process described below, as the assembly composed of batteries of condensers in series and parallel, as well as a self-resonating electronic system the special characteristics of which allow several steps intended to carry out very diverse functions at each time, in order to make the best use of the electric energy generated by the system, such as transferring it to the power grid or transferring from the power grid to the storage system, as a self-regulation element and to use the stored energy as an emergency element for own use or external use. As a connection error can cause serious problems that are hard to locate, the various electrolytic condensers (19) will be placed and interconnected according to need, and connected to the self-resonating electronic system with the utmost attention to the polarity of each one. After finishing the assembly work for the various modules, the final assembly is performed, consisting of physically anchoring the various sub-modules to the main structure (25).

If it is decided to connect the distribution to the power grid with superconductors (20), the specific characteristics to be used must be considered as the superconductors and high operating voltages can lead to specific problems in each situation.

The above description constitutes a faithful reflection of the present invention, wherein the characteristics described must be interpreted in a wide and non-limiting sense, the circumstances of purely formal, secondary or accessory nature that do not alter the essence of the invention as claimed below being indifferent and subject to change.

## Claims

1. Multifunction modular energy transformation system, preferably applied to railway transport by magnetic levitation, **characterised in that** it allows a series of non-excluding options compatible with the use of different traction systems and different energy types, also allowing combination with current conventional systems and future systems due to its non-closed design, being constituted by two main sub-modules, a lower fixed sub-module and an upper mobile sub-module which levitates over and along the length of the lower sub-module, the assembly being framed by a peripheral structure (25) that includes the various sub-modules and mutually related components that define the functionality of the system.

2. Multifunction modular energy transformation system, according to claim 1, **characterised in that** the lower sub-module of the system is configured by two supports (1) with an inverted-T profile made of a non-ferromagnetic material, preferably aluminium, complemented with synthetic resin; said supports (1) with an inverted-T profile house and hold a magnet (2) coated in resin on their internal horizontal leg, while on the upper part of the vertical leg of each support (1) with an inverted-T profile, on the side of the vertical leg of said T opposite to the one holding the magnet (2), is placed a magnet (3) with a magnetic orientation such that the resultant of the force vectors has dimensions that are added to the levitation vector of the magnet (2) and apply a lateral pressure for guiding and centring the mobile part of the system, in correspondence with each of the supports (1).

3. Multifunction modular energy transformation system, according to previous claims, **characterised by** a support (4) with an inverted-T profile that is opposed to the inverted T of the supports (1), this support (4) of the top mobile sliding system of the assembly allowing to grip and attach the block of lateral magnets (5) anchored at the height and with the orientation, width, thickness and magnetic flux values of the magnets required to obtain by means of the support (1) and the magnets (2) and (3) the desired levitation effects for the system; these elements together generate a set of forces that provide the module with a considerable centring force that allows levitating the mobile module of the system, while at the same time maintaining it in a specific height level by collaborating with the force of gravity if it is attempted to separate or raise the mobile module from its correct position.

4. Multifunction modular energy transformation system, according to previous claims, **characterised by** the magnet (6) of discontinuous ferromagnetic element attached to the upper part of the inverted T of the support (1), above the magnets (3) and along the path as the element on which the mobile platform of the supports (4) can slide.

5. Multifunction modular energy transformation system, according to previous claims, **characterised in that**, attached to each of the supports (4), on either side of their vertical leg and near the angle with the horizontal legs is placed a system or module (7), combined with the magnets (6), containing a motor/generator with an adaptor for different fuels which uses several small generator motors connected to each other by a caterpillar pulley system, each of these motors being individually composed by a torque adaptor system and a round magnetic system, the system as a whole using an energy adaptor/recoverer; this assembly allows the module to have several redundant auto-braking systems in case of control power loss and loss of contact with the traction system, as well as a protection system against work overioad.

6. Multifunction modular energy transformation system, according to previous claims, **characterised in that** between the supports (4) are placed the modules (8), which complement the above-described magnets (6) and modules (7) by providing a system for width regulation and self-regulation of the centring of the weight of the magnetic generator with constant force and stable equilibrium, as well as additional electromagnetic safety systems, hydraulic auto-control systems and a pressurised air generator; associated to one of the supports (1) an air propulsion system with functions such as a complementary self-centring element is foreseen, if necessary, or as an initial movement element.

7. Multifunction modular energy transformation system, according to previous claims, **characterised in that** above the system (7) on one side and under the inner horizontal leg of the T profile (4), connecting the two sides of the invention symmetrically, is disposed the part (9).

8. Multifunction modular energy transformation system, according to previous claims, **characterised in that** in the upper part of the assembly of the invention or mobile sub-module thereof and anchored to the T profile (4), respect to which it is separated by the presence of the space (21) foreseen for a cubicle, is placed the module (10), constituted by a non-ferromagnetic box containing the magnets (11) of different sizes and proportional to the weight required for a proper operation of the system, which magnets are superimposed to allow modelling the resulting magnetic field by interrelation with the ferromagnetic elements (12) and the ferromagnetic element (13) composed of several elements with a variable geometry. In connection with the magnets (11) and the ferromagnetic elements (12) and (13) is provided the controller (14), the magnetic effects of which model the resulting final geometry of the magnetic field. Regulation by said part (14) allows interrelation with the magnetic wells generated by the magnet (22).

9. Multifunction modular energy transformation system, according to previous claims, **characterised by** the programmable magnetic superconducting grid (1 5) complemented by a giant magnetic resistance circuit and a spin polariser. This entire assembly is duly protected by non-ferromagnetic elements, such as resin. The controls of this assembly (15), together with those performed by the controllers (14) on the magnetic shapers (12) and (13) provide all necessary system controls; in addition, the element (15) is provided with additional energy stores.

10. Multifunction modular energy transformation system, according to previous claims, **characterised in that** between the parts (1) with an inverted T profile and the parts (4) with a non-inverted T-profile is placed the solar energy capturer and programmable optical matrix module (16), which is formed by a set of lenses, prisms, mirrors and optic fibre in order to capture solar energy and route it through the optic fibre to the programmable matrix, which in turn makes it continue to the selected energy processing system.

11. Multifunction modular energy transformation system, according to previous claims, **characterised by** the bio-energy capturers and transformers (17) placed above the outer horizontal segment of one of the inverted-T profile supports (1). These elements (17) are formed by a series of capturers of raw material for its subsequent processing in order to obtain the compounds needed for optimum energy harnessing and depositing them in the store (18) placed under said bio-energy capturers and transformers (17). Said energy store and transformer (18) is meant to organise the entire process such that it transforms the various energetic components acquired into the required energy type, such as electrical energy, hydrogen, liquid nitrogen, oxygenated water or any other element or compound with high energetic power that is non-polluting, safe, and easily transformed subsequently, meant to be stored or sent to the various distribution networks.

12. Multifunction modular energy transformation system, according to previous claims, **characterised by** the electrolytic condenser (19) placed in the lower sub-module of the invention between the two inverted-T profiles (1) and foreseen as a secondary electrical transformation storage. This electrolytic condenser is comprised of batteries of condensers in series and in parallel, as well as a self-resonating electronic system with special characteristics that allow a series of steps intended to improve the use of the electric energy generated by the system, such as transferring the electric energy generated by the system to the distribution network or, instead, transferring energy from the electrical power grid to the storage systems, acting as a self-regulation system and allowing to use the stored energy as an emergency element for own or external use.

13. Multifunction modular energy transformation system, according to previous claims, **characterised by** the use of Peltier cells together with the superconductors (20), placed above the outer horizontal segment of the inverted-T profile (1) opposite that in which the elements (17) and (18) are placed, as well as under the magnets (3) meant for laying out an electric grid as a distribution element with high safety, low losses and high efficiency, implying that it must be refrigerated for which liquid nitrogen and said Peltier cells may be used, their energy being stored previously in the various processes by the components (16), (17), (18) and (19). As an additional safety element electrically connected in parallel to the superconductor (20) another conductor is provided, the two conductors being electrically connected in parallel at regular distance intervals.

14. Multifunction modular energy transformation system, according to previous claims, **characterised in that** the upper mobile sub-module, which is independent of the lower fixed sub-module as between them is the area (21) provided for the cubicle, is provided with a longitudinal magnet (22) superimposed on a ferromagnetic component and defined by segments of specific length, both elements starting at a sharp cut (23) and having a tapering end (24), this operation being repeated at regular intervals to determine variable magnetic generators or magnetic energy wells, all of this being attached to the main structure by a set of supports.

15. Multifunction modular energy transformation system, according to previous claims, **characterised in that** the main structure (25) acts as a frame and allows joining the various assemblies of the system claimed herein, from the lower fixed sub-module to the longitudinal magnet (22) placed above the mobile sub-module.

## Amended claims

### Amended claims under Art. 19.1 PCT

**1.** Multifunction modular energy transformation system, preferably applied to railway transport by magnetic levitation and movement, **characterised by**:
A. Magnetic generator having a constant force and stable equilibrium with complementary symmetry;
B. Variable magnetic generator or magnetic energy well generator, magnetic intermodulator and shaper, allowing a functional separation of the levitation and movement as well as allowing an energy intermodulation and interference assembly by achieving an energy transfer between these and the regulation and control system;
C. Self-regulation system for weight centring;
D. Modular assembly for transformation, transference, management and storage of non-magnetic energies.

**2.** Multifunction modular energy transformation system, according to claim 1; **characterised in that** the magnetic generator having a constant force and stable equilibrium with complementary symmetry is configured in two supports (1) with an inverted-T profile made of a non-ferromagnetic material, preferably aluminium, complemented by a synthetic resin; said supports (1) with an inverted-T profile house and hold on their inner horizontal leg a magnet (2) that is coated in resin, while on the top part of the vertical wall of each support (1) with an inverted-T profile, on the side of the vertical leg of said T opposite that on which the magnet (2) is placed, is a magnet (3) with a magnetic orientation meant to apply a lateral pressure for guiding and centring the mass composing the system, in correspondence with each support (1), a T-profile support (4) opposite or facing the inverted T profile of the supports (1), the support (4) of the assembly allowing to attach and hold the block of lateral magnets (5) to obtain, together with the support (1) and the magnets (2) and (3), the desired levitation effect of the mass of the system sub-module; these elements together generate a set of forces that provide the module with a considerable centring force that allows levitating the sub-module while at the same time maintaining it in a specific height range by collaborating with the force of gravity if it is attempted to separate or raise the sub-module from its correct position.

**3.** Multifunction modular energy transformation system, according to claim 1, **characterised in that** the variable magnetic generator or magnetic energy well generator, magnetic intermodulator and shaper allowing a functional separation of the levitation and movement as well as allowing an energy intermodulation and interference assembly by achieving an energy transfer between these and the regulation and control system, on the system (7) on one side and under the inner horizontal leg of the T-profile (4), connecting both sides of the invention in a symmetrical manner, is the part (9) on the upper part of the assembly of the invention and anchored to the T-profile (4), with respect to which it is separated by the presence of the space (21) foreseen for a cabin, the module (10) is disposed, constituted by a non-ferromagnetic box containing the magnets (11) of different sizes and proportional to the weight required for a correct system operation, which are superimposed to allow shaping the resulting magnetic field by interrelation with the ferromagnetic elements (12) and the ferromagnetic elements (13) composed of several elements of variable geometry, in connection with the magnets (11) and ferromagnetic elements (12) and (13) is provided the controller (14), the magnetic effects of which shape the resulting geometry of the magnetic field, regulation by said part (14) allows interrelation with the energy wells created by the magnet (22) together with the programmable superconducting grid (15) complemented by a giant magnetic resistance circuit and a spin polariser; this entire assembly is duly protected by non-ferromagnetic elements, such as resin; the controls of this assembly (15), together with those performed by the controllers (14) on the magnetic shapers (12) and (13) provide all necessary system controls; in addition, the element (15) is provided with additional energy stores; between them is placed the space (21) foreseen for a cabin, in which is the longitudinal magnet (22) superimposed on a ferromagnetic component and defined by segments of specific length, both elements starting at a sharp cut (23) and a tapering end of path (24), this operation being repeated at regular intervals to provide variable magnetic generators or magnetic energy wells, all of it being attached to the main structure by a set of supports.

**4.** Multifunction modular energy transformation system, according to claim 1, **characterised in that** the self-regulation system for weight centring comprises the magnet (6) or discontinuous ferromagnetic element, which is attached to the top part of the inverted T support (1), on the magnets (3) connected to each support (4) is placed, on either side of its vertical leg and near the angle with the horizontal segments, a system or module (7) combined with the magnets (6) which contains a motor / generator with an adaptor for various fuels that uses several small generator motors linked together by a caterpillar-type pulley system, each individual motor being composed by a torque adaptor system; this assembly as a whole provides several redundant self-braking systems in case of control power loss and disconnection from the traction system, as well as a protection system for work overload, between the supports (4) are placed the modules (8), which complement the above-described magnets (6) and modules (7) to provide a system for width regulation and self-regulation of the centring of the weight of the magnetic generator having a constant force and stable equilibrium with complementary symmetry, as well as the pressurised air generator systems associated to the supports (1) is foreseen an air propulsion system with functions such as an auxiliary self-centring component, if necessary, or as an initial movement device that would allow moving the train until normal conditions are restored.

**5.** Multifunction modular energy transformation system, according to claim 1, **characterised in that** the modular assembly for transformation, transference, management and storage of non-magnetic energies comprises between the parts (1) with an inverted T profile and the parts (4) with a non-inverted T-profile is placed the programmable optical matrix module (16), which is formed by a set of lenses, prisms, mirrors and optic fibre in order to channel solar energy and route it through the optic fibre to the selected energy processing system, such as the bioenergy capturers and transformers (17) located above the outer horizontal segment of the inverted-T supports (1); said elements (17) are formed by a set of capturers of raw material for its subsequent processing in order to obtain the various compounds needed for an improved energy harnessing and deposit in the store (18) placed under said bioenergy capturers and transformers (17); said energy store and transformer (18) is meant to organise the process such that it transforms the various energy components acquired into the required energy type, such as electrical energy, hydrogen, liquid nitrogen, oxygenated water or any other element or compound with high energetic power, that is non-polluting, safe, and easily transformed subsequently, meant to be stored or sent to the various distribution networks comprising the electrolytic condenser (19) placed in the lower sub-module of the invention between the two inverted-T profiles (1) and foreseen as a secondary electrical transformation storage; said electrolytic condenser is comprised of batteries of condensers in series and in parallel, as well as a self-resonating electronic systems with special characteristics that allow a series of steps intended to improve the use of the electric energy generated by the system, such as transferring the electric energy generated by the system to the distribution network or, instead, transferring energy from the electrical power grid to the storage systems, acting as a self-regulation system and allowing to use the stored energy as an emergency element for own or external use; placed on the outer horizontal segment of the inverted-T profile support (1) opposite the one in which the elements (17) and (18) are placed, as well as under the magnets (3), is foreseen laying out an electrical grid as a high safety, low loss and high efficiency distribution element; as an additional safety element another conductor is connected electrically in parallel, the two conductors being electrically connected in parallel at regular intervals.
